# EUROPEAN PATENT SPECIFICATION

(11) **EP 0 948 698 B1**
(45) Date of publication and mention of the grant of the patent: **25.09.2002**
(21) Application number: 97911145.7
(22) Date of filing: 30.10.1997
(51) Int. Cl.: E06B 9/13

(54) **A ROLLER SHUTTER FOR WINDOWS, DOORS AND THE LIKE AND A METHOD OF MANUFACTURING**
EIN ROLLADEN FÜR FENSTER, TÜREN ODER DERGLEICHEN UND HERSTELLUNGSVERFAHREN
VOLET ROULANT POUR FENETRES, PORTES ET ARTICLES SIMILAIRES ET PROCEDE DE FABRICATION

(30) Priority: 01.11.1996 DK 122596
(43) Date of publication of application: 13.10.1999
(73) Proprietor: VKR Holding A/S, 2860 Soeborg (DK)
(72) Inventor: NIELSEN, Torben, Holst, DK-2610 Roedovre (DK); HANSEN, Soeren, DK-7323 Give (DK)
(74) Representative: Raffnsöe, Knud Rosenstand
(86) International application number: DK9700489
(87) International publication number: WO98020225

(56) References cited:
- EP-A- 0 343 755
- EP-A- 0 410 364
- WO-A-92/21516
- DE-A- 3 912 528
- DE-B- 1 275 267

## Description

The present invention relates to a roller shutter for windows, doors and the like with a number of slats of a mainly curved cross-sectional profiile secured individually to a flexible web or cloth which forms hinge connections in the interspaces between the slats.

From EP-B1-0 410 364 a roller shutter is known, in which the slats are connected in pairs around the flexible web or cloth. For the manufacture of a roller shutter with given dimensions a double set of slats is therefore required, the manufacture being simultaneously made complicated by the prescribed pairwise interlocking of the slats. The fact that the flexible web or cloth on account of the interlocking has to follow the cross-sectional profile of the individual slats that requirements are made as to good strength of the flexible web or cloth.

EP-A-0 343 755 discloses a roller shutter of the above type, in which the slats are secured individually by being directly embedded on the flexible web or cloth. It is a prerequisite for such an embedding to use slats of plastic material which by use of a plastic foil as carrier web also has to be mouldable at a lower temperature than the plasticizing temperature. Moreover, a comparatively heavy deformation of the carrier web takes place at the embedment.

In DE-A1-39 12 528 a roller shutter is disclosed, in which slats having varying curvature is connected with a flexible supporing web in a manner not specified. Also in this structure the supporting is deformed to follow the cross-sectional curvature of the slats.

In WO 92/21516 a composite structure such as a roller door is disclosed in which a plurality of rigid slats are encapsulated between two flexible sheets by means of an adhesive. The use of two webs arranged on either side of the slats increases the costs and complicates the manufacture of this structure.

On this background it is the object of the invention to provide a provide roller shutter which, compared to EP-B-0 410 364 and DE-A-3912258 is simpler and cheaper in respect of material consumption and manufacturing process, and, compared to EP-A-0 343 755 provides a wider freedom of choice in respect of the slat material by substantially avoiding deformation of the carrier web.

To meet this object the roller shutter according to the invention is characterized in that the slats are prefabricated and are secured only with their concave side to said web or cloth by means of an intermediate layer of a thermoplastic material applied to assume full surface contact with the web or cloth and with said concave side and in a way so as to substantially avoid deformation of the web or cloth.

The slats may consist of curved, extruded profiles of metal foil, for instance aluminium foil, or thermoplastic material, whereas the flexible web or cloth may be a fine-meshed synthetic web and the intermediate layer may consist of a suitable thermoplastic material like for instance thermoplastic polyurethane.

Further advantages and details of the roller shutter according to the invention appear from dependent claims 2-10.

Furthermore, the invention relates to a method of manufacturing the roller shutter, which method according to the invention is characterized in that to one side of a flexible web or cloth a coating of thermoplastic material is applied to provide said intermediate layer, on top of which the prefabricated slats are placed with their concave side facing the intermediate layer and in parallel transversely to an advancing direction for the web or cloth by means of a shaping device which brings the concave side of the slats in surface contact with the thermoplastic intermediate layer in a way so to substantially avoid deformation of the web or cloth, the intermediate layer in the interspaces between the slats being impacted with the cloth to a thickness suited for providing said hinge connection.

In this way a manufacturing process is obtained which is well suited for industrial production.

Further advantages and details of this method appear from the subclaims 12-16.

The invention will now be explained in the following with reference to the schematic drawings, in which
Fig. 1 in perspective shows a sectional view of an embodiment of a roller shutter according to the invention,
Fig. 2 an enlarged sectional view of a part of the sectional view shown in Fig. 1, and
Fig. 3 the substantial parts of a plant for the manufacture of a roller shutter as shown in Figs 1 and 2 for illustrating the method according to the invention.

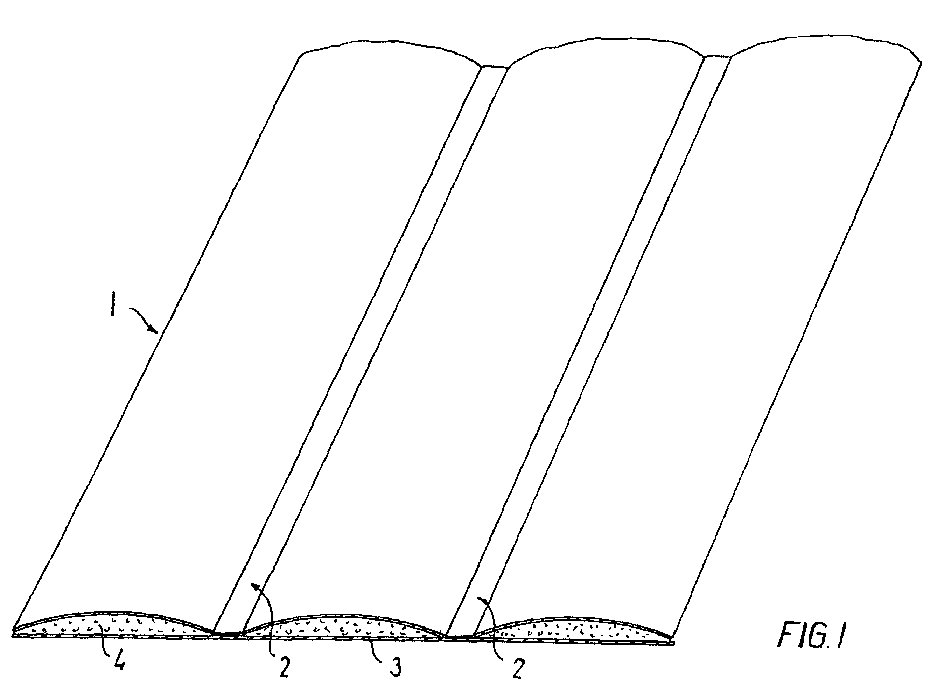

In the embodiment shown in Fig. 1 a roller shutter according to the invention comprises a number of slats 1 of a curved cross-sectional profile and secured parallel to each other with interspaces 2 to a flexible cloth 3 which forms hinge joints in the slat interspaces 2.

According to the invention the retainment of the slats 1 to the cloth 3 takes place by means of an intermediate layer of thermo-plastic material and is carried out such that the intermediate layer 4 is in full surface contact with both the cloth 3 and the concave side of the slats 1.

In the example shown the slats 1 are in the example shown made as curved extruded profiles of aluminium foil with a thickness 0.1 - 0.5 mm, for instance 0.2 mm. The slats may typically have a width of 25-40 mm, for instance 30 mm, and a radius of curvature of 35-60 mm, for instance 45 mm, whereas the slat interspaces 2 may have a width of 4-10 mm, for instance 5 mm.

In another embodiment the slats 1 may be made as curved profiles of a thermoplastic material, for instance thermoplastic polyurethane, with a thickness of 1.5 - 2.5 mm, for instance 2 mm.

The thermoplastic intermediate layer 4 may consist of any suitable thermoplastic material. A suitable material is thermoplastic polyurethane. As explained in detail in the following, the application of the intermediate layer 4 preferably takes place in such a way that the thickness of the intermediate layer 4 together with the cloth 3 in the slat interspaces 2 is in the range from 0.4 to 0.7 mm, for instance 0.5 mm, such that a good flexibility of the hinge connection formed in the interspaces 2 is obtained.

In order to further ensure the retainment of the slats 1 to the cloth 3 by the intermediate layer 4, a coating 5 of thermoplastic material has been applied to the convex side of the slats 1. Such a coating may form a comparatively thin film with a thickness of for instance 0.2 mm, and, like in case of the intermediate layer 4, a suitable material for this may be thermoplastic polyurethane. By use of slats made from aluminium foil or other metal foils such a coating will also function as a protective weather shield.

The coating 5 is, however, not absolutely necessary, as the slats 1 may for instance be provided on the concave side with a profiling which is anchored or interlocked in the thermoplastic intermediate layer 4. This may for instance be advantageous when using slats made form a thermoplastic material.

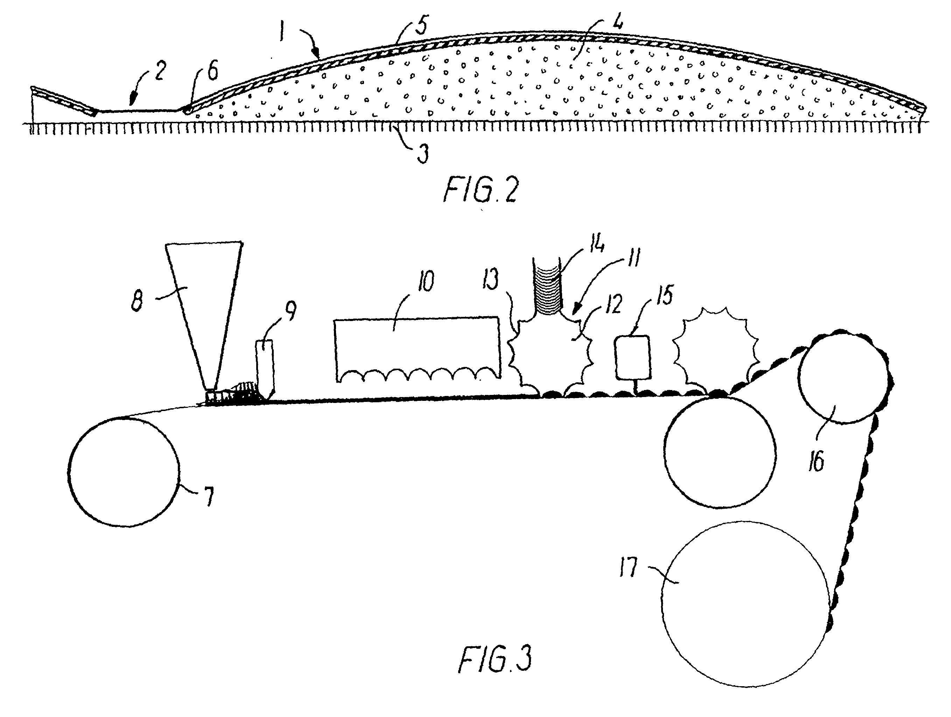

In order to provide a good retainment of the slats 1 to the intermediate layer 4, also at the transition to the hinge joints in the slat interspaces 2 and a good wearability of the hinge joints, it may be advantageous if the cross-sectional profile of the slats 1, as shown in Fig. 2, tapers towards the side edges 6 facing the interspace 2.

At the manufacture of the roller shutter on a production plant as shown schematically in Fig. 3, the cloth 3 is advanced from a roll 7 towards an application station 8, in which the thermoplastic material, for instance thermoplastic polyurethane, which is to form the intermediate layer 4, in the example shown is applied in powder form and brushed off to the desired thickness by means of a brushing off device 9, following which the cloth 3 with the applied thermoplastic material passes a heat-treatment station 10, in which the thermoplastic material is melted to a viscous consistence.

Subsequently, the slats 1 are positioned on in a feeding station 11 by means of a shaping device in form of a profiled roller 12 with longitudinal grooves or tracks 13 adapted to the cross-sectional profile of the slats 1, the slats 1 being supplied to the roller 12 from a feeding stack 14. The special design of the shaping roller 12 with a star-like cross-section also has the effect that the intermediate layer 4 and the cloth 3 in the slat interspaces 2 are compressed to the desired thickness as described above.

In the coating station 15, a thin foil coating is applied as described above, for instance by spraying, before the cloth 3 with the slats 1 positioned thereon and retained by means of the intermediate layer 4 is taken to a cooling station 16 and further on to a rewinding drum 17 for the finished roller shutter.

Instead of application of the thermoplastic material for the intermediate layer 4 in powder form as described above, the intermediate layer 4 may be applied by coextrusion with lamination of the intermediate layer 4 to the cloth 3.

## Claims

1. A roller shutter for windows, doors and the like with a number of slats (1) of a mainly curved cross-sectional profile arranged in parallel and secured individually to a flexible web or cloth (3) which forms hinge connections in the interspaces (2) between the slats, **characterized in that** the slats (1) are prefabricated and secured only with their concave side to said web or cloth (3) in a stretched state thereof by means of an intermediate layer (4) of a thermoplastic material applied to fill the space between the web or cloth and said concave side so as to assume full surface contact with the web or cloth (3) and with said concave side.

2. A roller shutter according to claim 1, **characterized in that** a coating (5) of a thermoplastic material is applied to the convex side of the slats (1) facing away from the cloth (3).

3. A roller shutter according to claim 1 or 2, **characterized in that** the slats (1) are made as curved extruded profiles with a width in the range from 25 to 40 mm, a radius of curvature of 35-60 mm and a mutual spacing in the area of 4-10 mm.

4. A roller shutter according to claim 2, **characterized in that** the slats (1) are profiles made from metallic foil with a thickness of 0.1 - 0.5 mm.

5. A roller shutter according to claim 2, **characterized in that** the slats are profiles of thermoplastic material with a thickness of 1.5 - 2.5 mm.

6. A roller shutter according to any of the preceding claims, **characterized in that** said web or cloth (3) consists of a fine-meshed synthetic web with a thickness of 0.1 - 0.4 mm.

7. A roller shutter according to one of the preceding claims, **characterized in that** the thermoplastic intermediate layer (4) together with said web or cloth (3) and possibly said coating (5) in the interspaces (2) between the slats (1) has a thickness of 0.3 - 0.7 mm.

8. A roller shutter according to one of the preceding claims, **characterized in that** the intermediate layer (4) consists of thermoplastic polyurethane.

9. A roller shutter according to claim 2, **characterized in that** said coating (5) consists of thermoplastic polyurethane.

10. A roller shutter according to one of the preceding claims, **characterized in that** the slats (1) are made with a cross-sectional profile which tapers with the side edges (6) facing the interspaces (2).

11. A method for the manufacture of a roller shutter according to one of the preceding claims, **characterized in that** to one side of a flexible web or cloth (3) in a stretched state thereof a coating of thermoplastic material is applied to provide said intermediate layer (4), on top of which the prefabricated slats (1) are placed with with their concave saide facing the intermediate layer and in parallel transversely to an advancing direction for the web or cloth (3) by means of a shaping device (12) which brings the concave side of the slats in surface contact with the thermoplastic intermediate layer (4), the intermediate layer (4) in a way so that the intermediate layer filles the spaces between the web and the concave sides of the slats, whereas the intermediate layer (4) in the interspaces between the slats (1) being impacted with the cloth (3) to a thickness suited for providing said hinge connection.

12. A method according to claim 11, **characterized in that** the application of said coating is made by applying a powder with subsequent heat-treatment.

13. A method according to claim 11, **characterized in that** the application of said coating is made by co-extrusion of said web or cloth (3) by lamination of the thermoplastic material.

14. A method according to claim 11, 12 or 13, **characterized in that** said shaping device (12) comprises a profiled roller with longitudinal grooves or tracks (13) adapted to the cross-sectional profile of the slats.

15. A method according to one of the claims 11-14, **characterized in that** a coating (5) of a thermoplastic material is applied to the convex side of the slats (1).

16. A method according to claim 15, **characterized in that** said coating (5) is applied in the form of a dispersion of a thermoplastic material.

## Patentansprüche

1. Rolladen für Fenster, Türen und dergleichen mit einer Anzahl parallel angeordneter Lamellen (1) mit hauptsächlich gewölbtem Querschnittsprofil, die an eine in den Zwischenräumen (2) zwischen den Lamellen Scharnierverbindungen bildende flexible Bahn oder flexibles Tuch (3) einzeln befestigt sind, **dadurch gekennzeichnet, dass** die Lamellen (1) vorgefertigt sind und nur mit ihrer konkaven Seite mit Hilfe einer Zwischenschicht (4) aus thermoplastischem Material an erwähnte Bahn oder Tuch (3) in deren/dessen straffen Zustand festgehalten sind, welches thermoplastische Material zum Ausfüllen des Zwischenraums zwischen der Bahn oder dem Tuch und der konkaven Seite für vollen Oberflächenkontakt mit der Bahn oder dem Tuch (3) und erwähnter konkaven Seite vorgesehen ist.

2. Rolladen nach Anspruch 1, **dadurch gekennzeichnet, dass** auf der vom Tuch (3) abgekehrten konvexen Seite der Lamellen (1) eine Beschichtung (1) aus thermoplastischem Material aufgetragen ist.

3. Rolladen nach Anspruch 1 oder 2, **dadurch ge-kennzeichnet, dass** die Lamellen (1) als gewölbte extrudierte Profile mit einer Breite im Bereich 25-40 mm, einem Krümmungsradius im Bereich 35-60 mm und einem gegenseitigen Abstand im Bereich 4-10 mm ausgeführt sind.

4. Rolladen nach Anspruch 2, **dadurch gekennzeichnet, dass** die Lamellen (1) Profile aus Metallfolie mit einer Dicke von 0,1-0,5 mm sind.

5. Rolladen nach Anspruch 2, **dadurch gekennzeichnet, dass** die Lamellen (1) Profile aus thermoplastischem Material mit einer Dicke von 1,5-2,5 mm sind.

6. Rolladen nach einem der vorhergehenden Ansprüche, **dadurch gekennzeichnet, dass** erwähnte Bahn oder Tuch (3) aus feinmaschigem synthetischem Gewebe mit einer Dicke von 0,1-0,4 mm besteht.

7. Rolladen nach einem der vorhergehenden Ansprüche, **dadurch gekennzeichnet, dass** die thermoplastische Zwischenschicht (4) zusammen mit erwähnter Bahn oder Tuch (3) und gegebenenfalls erwähnter Beschichtung (5) in den Zwischenräumen (2) zwischen den Lamellen (1) eine Dicke von 0,3-0,7 mm aufweist.

8. Rolladen nach einem der vorhergehenden Ansprüche, **dadurch gekennzeichnet, dass** die Zwischenschicht (4) aus thermoplastischem Polyurethan besteht.

9. Rolladen nach Anspruch 2, **dadurch gekennzeichnet, dass** erwähnte Beschichtung (5) aus thermoplastischem Polyurethan besteht.

10. Rolladen nach einem der vorhergehenden Ansprüche, **dadurch gekennzeichnet, dass** die Lamellen (1) mit einem Querschnittsprofil hergestellt sind, dessen den Zwischenräumen (2) zugewandte Seitenkanten (6) zuspitzen.

11. Verfahren zur Herstellung eines Rolladens nach einem der vorhergehenden Ansprüche, **dadurch gekennzeichnet, dass** zum Erzeugen erwähnter Zwischenschicht (4) auf der einen Seite einer flexiblen Bahn oder eines Tuches (3) in deren/dessen straffen Zustand eine Beschichtung aus thermoplastischem Material aufgetragen wird, auf welcher Zwischenschicht oben mit Hilfe einer Formgebungseinritung (12) die vorgefertigten Lamellen (1) mit ihrer konkaven Seite der Zwischenschicht zugekehrt und parallel quer zu einer Vorschubrichtung für die Bahn oder das Tuch (3) plaziert werden, welche Formgebungseinrichtung die konkave Seite der Lamellen in Oberflächenkontakt mit der thermoplastischen Zwischenschicht (4) bringt, derart, dass die Zwischenschicht den Raum zwischen der Bahn und den konkaven Seiten der Lamellen ausfüllt, während die Zwischenschicht (4) in den Zwischenräumen zwischen den Lamellen (1) mit dem Tuch (3) auf eine zum Zustandekommen erwähnter Scharnierverbindung passende Dicke zusammengepresst wird.

12. Verfahren nach Anspruch 11, **dadurch gekennzeichnet, dass** das Auftragen erwähnter Beschichtung durch Auftragen eines Pulvers mit anschliessender Wärmebehandlung erfolgt.

13. Verfahren nach Anspruch 11, **dadurch gekennzeichnet, dass** das Auftragen der Beschichtung durch Co-Extrudierung erwähnter Bahn oder Tuches (3) durch Laminieren des thermoplastischen Materials erfolgt.

14. Verfahren nach Anspruch 11, 12 oder 13, **dadurch gekennzeichnet, dass** erwähnte Formgebungseinrichtung (12) eine profilierte Walze mit längsverlaufenden, dem Profilquerschnitt der Lamellen angepassten Rillen oder Spuren (13) umfasst.

15. Verfahren nach Anspruch 15, **dadurch gekennzeichnet, dass** auf der konvexen Seite der Lamellen (1) eine Beschichtung (5) aus thermoplastischem Material aufgetragen wird.

16. Verfahren nach Anspruch 15, **dadurch gekennzeichnet, dass** erwähnte Beschichtung (5) in Form einer Dispersion eines thermoplastischen Materials aufgetragen wird.

## Revendications

1. Volet roulant pour fenêtres, portes et articles similaires avec un nombre de lames (1) d'un profilé de section essentiellement courbé arrangées en parallèles et fixées individuellement à un tissu flexible ou à une toile (3) formant des charnières dans les intervalles (2) entre les lames, **caractérisé en ce que** les lames (1) sont préfabriquées et ne sont fixées que par leur côté concave audit tissu ou audite toile (3) dans son état étendu au moyen d'une couche intermédiaire (4) d'un matériau thermoplastique appliqué pour remplir l'espace entre le tissu ou la toile et ledit côté concave afin d'assurer un contact entier de surface avec le tissu ou la toile (3) et avec ledit côté concave.

2. Volet roulant selon la revendication 1, **caractérisé en ce qu'**un enduit (5) d'un matériau thermoplastique est appliqué au côté convexe des lames (1) détourné de la toile (3).

3. Volet roulant selon la revendication 1 ou 2, **caractérisé en ce que** les lames (1) sont faites comme des profilés courbés et extrudés avec une largeur aux environs de 25 à 40 mm, un rayon de courbure de 35 à 60 mm et un espacement entre elles aux environs de 4 à 10 mm.

4. Volet roulant selon la revendication 2, **caractérisé en ce que** les lames (1) sont des profilés faits de feuille de métal avec une épaisseur de 0,1 à 0,5 mm.

5. Volet roulant selon la revendication 2, **caractérisé en ce que** les lames sont des profilés de matériau thermoplastique avec une épaisseur de 1,5 à 2,5 mm.

6. Volet roulant selon l'une quelconque des revendications précédentes, **caractérisé en ce que** ledit tissu ou ladite toile (3) est constitué par un tissu synthétique à petites mailles avec une épaisseur de 0,1 à 0,4 mm.

7. Volet roulant selon l'une quelconque des revendications précédentes, **caractérisé en ce que** la couche intermédiaire thermoplastique (4) avec ledit tissu ou ladite toile (3) et éventuellement ledit enduit (5) dans les intervalles (2) entre les lames (1) présente une épaisseur de 0,3 à 0,7 mm.

8. Volet roulant selon l'une quelconque des revendications précédentes, **caractérisé en ce que** la couche intermédiaire thermoplastique (4) consiste en polyuréthanne thermoplastique.

9. Volet roulant selon la revendication 2, **caractérisé en ce que** ledit enduit (5) consiste en polyuréthanne thermoplastique.

10. Volet roulant selon l'une quelconque des revendications précédentes, **caractérisé en ce que** les lames (1) sont faites avec un profil de section pointant avec les côtés latéraux (6) faisant face aux intervalles (2).

11. Procédé de production d'un volet roulant selon l'une quelconque des revendications précédentes, **caractérisé en ce que** l'un côté d'un tissu flexible ou d'une toile (3) dans son état étendu est appliqué d'un enduit de matériau thermoplastique pour créer ladite couche intermédiaire (4), au-dessus de laquelle les lames préfabriquées (1) sont arrangées avec leur côté concave faisant face à la couche intermédiaire et en parallèle transversalement à une direction d'avance du tissu ou de la toile (3) au moyen d'un dispositif de façonnage (12) plaçant le côté concave des lames en contact de surface avec la couche intermédiaire thermoplastique (4) si bien que la couche intermédiaire remplit les espaces entre le tissu et les côtés concaves des lames, tandis que la couche intermédiaire (4) dans les intervalles entre. les lames (1) est comprimée avec la toile (3) à une épaisseur appropriée à créer ladite charnière.

12. Procédé selon la revendication 11, **caractérisé en ce que** l'application dudit enduit est effectué en appliquant une poudre, suivi d'un traitement thermique.

13. Procédé selon la revendication 11, **caractérisé en ce que** l'application dudit enduit est effectué par co-extrusion dudit tissu ou de ladite toile (3) par stratification du matériau thermoplastique.

14. Procédé selon la revendication 11, 12 ou 13, **caractérisé en ce que** ledit dispositif de façonnage (12) comprend un rouleau profilé avec des fentes ou voies longitudinales (13) adaptées au profil de section des lames.

15. Procédé selon l'une des revendications 11-14, **caractérisé en ce qu'**un enduit (5) d'un matériau thermoplastique est appliqué au côté convexe des lames (1).

16. Procédé selon la revendication 15, **caractérisé en ce que** ledit enduit (5) est appliqué dans la forme d'une dispersion d'un matériau thermoplastique.
